# EUROPEAN PATENT APPLICATION

(11) **EP 3 862 327 A1**
(43) Date of publication of application: **11.08.2021**
(21) Application number: 20156264.2
(22) Date of filing: 07.02.2020
(51) Int. Cl.: C02F 3/00, H01M 8/16, C02F 1/461

(54) **WASTEWATER TREATMENT SYSTEMS AND METHODS**

(71) Applicant: Wase Ltd, London W3 0TG (GB)
(72) Inventor: FUDGE, Thomas Philip, London, W3 0TG (GB); GAMBIER, William Sebastian Gore, London, W3 0TG (GB); BULMER, Isabella Maria Dorothy, London, W3 0TG (GB); BOWMAN, Kyle Michael, London, W3 0TG (GB); WILLIAMS, Llyr Anwyl, London, W3 0TG (GB)
(74) Representative: Elkiner, Kaya

(57) **Abstract**

An improved bio-electrochemical wastewater treatment process and system (1) is disclosed. An electrode assembly (4) is defined by interconnecting a set of electrode modules (5). Each electrode module (5) has a first electrode of an anode-cathode pair coated with electrogenic microbes adapted to generate electrons via the consumption of organic matter in wastewater. An electrode module (5) has a second electrode of the anode-cathode pair, and a body, supporting and separating the first and second electrodes. Each electrode module (5) also comprises an interface for physically connecting the module with at least one other of the set.

## Description

### Field of the invention

The present invention relates to improvements to systems and methods for the treatment of wastewater or organic waste and generation of electricity and/or fuels. The present invention relates in particular to the application of biological electrochemical systems (BES), such as microbial fuel cells (MFCs) and microbial electrolysis cells (MECs) for use in such systems and methods.

### Background to the invention

Bioelectrochemical systems (BES) are increasingly finding application for the treatment of wastewater. These systems generally include electrodes coated with specific microorganisms that are able to purify wastewater, for example via the oxidation of organic compounds into carbon dioxide. Furthermore, these systems and processes are able to generate useful by-products including electricity, gaseous fuels such as methane and hydrogen, fertilisers, solid fuels such as biochar or charcoal, bioplastics and other valuable products.

The exact function and efficacy of a BES varies in dependence on the configuration of the system. Generally, an anode is provided within an aqueous chamber into which wastewater to be purified is introduced. The anode is coated with exo-electrogenic bacteria which generate electrons, carbon dioxide, and protons (i.e. hydrogen ions) as organic matter is broken down. The electrons are conducted directly to the anode, whereas the protons remain within the aqueous solution.

If the BES is in a microbial fuel cell (MFC) configuration, for example, oxygen and the hydrogen ions are reduced at the cathode to generate water, with electricity being generated by the circuit between the anode and cathode. In an anaerobic MEC (microbial electrolysis cell) configuration, an external power source connected between the electrodes drives hydrogen production at the cathode instead, with increased levels of oxidation of organic matter at the anode. Additionally, electromethanogenic microorganisms on an electrode may be used to generate methane.

Such systems are becoming increasingly well-known for their application within public wastewater treatment plants, and the processing of waste in the chemical or food processing industries. These application tend to be implemented via the connection of existing plant infrastructure to large-scale purpose-built bio-electrochemical systems that are designed for the specific needs of the plant. For example, input parameters such as the flow-rate of wastewater, its moisture content, chemical oxygen demand (COD) etc. need to be optimally balanced against outputs such as treated water purity, biogas volume and electrical energy.

Accordingly, existing BES architectures tend to be bespoke to a particular wastewater treatment application, and are not adaptable enough to accommodate a wide range of different applications that have significantly varying input and output parameters. Accordingly, it is impractical to deploy many BES architectures at a smaller-scale, at remote locations, and/or for the purpose of retrofitting BES functionality to existing waste-handling infrastructure.

It is against this background that the present invention has been devised.

### Summary of the invention

According to a first aspect of the present invention there is provided a bio-electrochemical wastewater treatment system according to claim 1.

The system comprises at least one of a wastewater treatment tank, an electrode assembly, and an external electrical source or load. A circuit may also be provided to connect the external electrical source or load to the electrode assembly.

The tank ideally comprises a wastewater intake and a treated water outlet. In certain aspects the tank may be any suitable vessel or container for holding wastewater to be treated. For example, the tank could take the form of a bag, in an anaerobic bag digester. In certain aspects, the tank may extend to a reservoir or a specifically-constructed wetland, with wastewater flowing into it via an upstream source, and treated water flowing from it from a downstream source. It is preferred, however, for the tank to be a sealed vessel, with a specific wastewater intake, a treated water outlet, and ideally a gas port via which gases generated via the bio-electrochemical process can be harvested and utilised. Naturally, there may be multiple intakes, outlets, and gas posts. Additionally, the tank may be divided into a sequence of adjoining chambers thereby forcing wastewater to follow a non-linear path between the intake and the outlet, thereby advantageously increasing the period of treatment, and contact between the wastewater and the electrode assembly.

Preferably, in use, the electrode assembly is submerged within the wastewater treatment tank between the intake and outlet. Preferably, the electrode assembly comprises a set of electrode modules. These may be interconnectable with one another. One or more of the set of electrode modules ideally comprise a first and second electrode of an anode-cathode pair. The first electrode, ideally the anode of the anode-cathode pair, may be provided with a bio-coating of electrogenic microbes adapted to generate electrons via the consumption of organic matter in wastewater. The coating may comprise electromethanogenic microbes, thereby capable of generating both electricity and methane via the consumption of organic matter within the wastewater. The coating may comprise hydrogenotropic microbes capable of generating biogas via the conversion of organic matter, hydrogen and/or carbon dioxide. A heterogeneous set of microbes may be used in each coating. Examples of microbes for this purpose include bacteria of the genus *Geobacter* and *Shewanella.*

In some aspects, the second electrode - ideally the cathode of the anode-cathode pair - may not necessarily be coated with microbes. In other aspects, at least some of the second electrodes may also be provided with similar coatings.

Ideally, a body of the electrode modules supports the first and second electrodes, and separates them both physically and electrically.

To facilitate modularity, the electrode modules comprise an interface via which they may be connected to one another. Moreover, the interface may be configured and arranged to physically connect an electrode module with at least one other. Preferably, the interface is configured and arranged to physically connect an electrode module with at least two others thereby allowing a chain of electrode modules to be defined. Additionally, the interface is further arranged to electrically-connect the electrodes of interconnected electrode modules. In particular, the interface facilitates connection between the first and second electrodes of one electrode module with respective first and second electrodes of other connected electrode modules. Thus, in a set of electrode modules, all of the first electrodes are electrically-connected together, and independent to this, all of the second electrodes are electrically-connected together.

Preferably, the system also comprises a circuit that electrically-connects the electrodes of the set of electrode modules to an electrical source or load. The system may be configured to control switching between an electrical source or load depending on the configuration of the thus defined bio-electrochemical system. Typically, if the system is to operate in a microbial fuel cell (MFC) configuration, for example, the circuit electrically-connects the electrodes of the set of electrode modules to an electrical load. If the system is to operate in a microbial electrolysis cell (MEC) configuration, for example, the circuit electrically-connects the electrodes of the set of electrode modules to an electrical source. An electrical source may comprise a solar panel. An electrical load may comprise another system according to an aspect of the present invention. Thus circuits of different systems may be coupled to one another, for example with an MFC providing electrical power to an MEC.

The modularly of the resulting system is particular advantageous, and overcomes the drawbacks of existing system described in the preamble, at least in part. For example, as the electrode assembly can be composed of a set of electrode modules, its size, shape and capabilities can be adapted for a variety of different profiles of wastewater treatment tank. The rate of reduction of BOD, generation of biogas and/or electricity etc can be modified by connecting together a greater or fewer number of modules as appropriate.

It should be noted that the electrode modules are preferred to be membraneless - for example, without a proton exchange membrane between them.

As mentioned, the system of aspects of the present invention may be applied to an anaerobic bag digester, and thus be used for enhancing their operation, in particular for the generation of biogas.

Preferably, the interface of one electrode module comprises a coupling member for coupling with a complementary coupling member of another electrode module. One coupling member may be a plug and the other may be a socket for example. Ideally, the interface of each electrode module of the set comprises a coupling member, such as a plug or socket, for coupling with a complementary coupling member, such as a socket or plug of other electrode modules of the set.

Ideally, complementary coupling members are shaped and arranged for a push-fit or snap-fit connection. The interface may comprise a latch portion for preventing uncoupling of connected complementary coupling members.

The body of each electrode module may be elongate, thus defining a first end and a second end. Ideally, the interface of each electrode module comprises first and second complementary coupling members located toward respective first and second ends of the body. Advantageously, this allows an elongate series of electrode modules to be connected to one another.

Preferably the system comprises a buoy. Preferably, the buoy is arranged, in use to float within the wastewater treatment tank. Ideally, the buoy comprises a connector configured and arranged for connection with the interface of an electrode module. Thus, in use, a set of electrode modules can hang from the buoy, submerged in the wastewater to be treated. In certain aspects, the connector of the buoy is further coupled to the circuit leading to the electrical source or load. Advantageously, this allows easy assembly of the system as only a single connection is required.

Preferably, the system comprises a weight. Ideally, the weight comprises a connector configured and arranged for connection with the interface of an electrode module. When both a buoy and weight are used together, this draws a set of interconnected electrode modules between them - with a buoy at their upper end and a weight at their lower end - into a vertical position between the buoy and the weight.

Advantageously, the buoy/weight arrangement ensures that the electrodes are kept submerged within the wastewater treatment tank. This is important when the tank contains a gaseous headspace. If the microbes coated on the electrodes enter the headspace they cannot consume organic matter within the wastewater, and so will not effectively treat the wastewater. Moreover, the microbial population cannot thrive without an organic food source, and so will dwindle over time.

Preferably, the electrode assembly comprises at least two sets of interconnectable electrode modules. Furthermore, the buoy may comprise at least two corresponding connectors for connection with a respective set of electrode modules. The at least two connectors may be positioned and spaced from one another to separate each set of electrode modules from one another in use. The system may comprise separation struts for this purpose, or the at least two connectors may simply be positioned on the buoy at different spaced locations.

It should be noted that the buoy may be made from one or more buoy members. For example, the buoy could be a matrix of buoy members (e.g. ball floats) interconnected and separated from one another by separation struts. Alternatively, the buoy may be constructed from a single unit containing low-density material. The buoy could comprise one or more inflatable bladders, for example.

Advantageously, when the buoy is inflatable, even at least in part, this allows the buoy to occupy a smaller volume during transport than when in use within the wastewater treatment tank.

The system may similarly be provided with one or more weights. When there are a plurality of weights, there is ideally one for each set of electrode modules. In certain aspects, the plurality of weights may be interconnected and separated from one another by struts. It is preferred that this matches the separation at the upper end of the electrode sets so that each electrode set is suspended between the weight(s) and buoy(s) in orientations that are ideally both vertical and parallel to one another. This allows an optimal distribution of wastewater treatment sites throughout the tank, and also prevent short-circuiting of the electrodes.

As mentioned, in certain aspects of the invention, the tank may take on other forms, and may not necessarily be sealed for the benefits of the invention to be realised. The wastewater treatment tank may be open at its upper end for example. In this example, it is preferred that the system further comprises a gas trap configured and arranged to capture gas emitted by the electrode assembly, and in particular from the electrodes of the anode-cathode pairs defined by the one or more sets of electrode modules. The gas trap is ideally configured for attachment relative to the electrode assembly above the electrode modules so as to capture gas such as methane and/or hydrogen. Advantageously, the allows flexibility in the choice of wastewater tank - it need not necessarily be sealed or provided with a gas port.

Particularly envisaged is the deployment of certain aspects of the system in an outdoor environment such as within a wetland environment. In such aspects, the gas trap and/or buoy(s) typically float on the surface of the wastewater to be treated. Furthermore, they may support other components of the system, such as external electrical sources or loads. For example, solar panels can be supported and connected to the electrode modules. A further advantage resides in contacting or circulating water across a rear surface of the solar panels. This has the advantage of cooling them down, thereby increasing their performance. This also typically raises the temperature at the reaction sites adjacent to the electrodes of the system again improving reaction efficacy and so the efficiency of the breakdown of organic matter within the wastewater.

The body of each electrode module is ideally constructed from a material that is flexible. Advantageously, this allows the electrode modules to be rolled up for easy transport to remote locations. The material is ideally porous, allowing flow-through of wastewater.

Preferably, the electrode assembly comprises a plurality of electrode modules disposed between the intake and the outlet with a varying spacing between the anode-cathode pairs defined by the electrode modules. The spacing may vary depending on the position of the anode-cathode pairs between the intake and outlet. For example, the spacing between the anode-cathode pairs defined by the electrode modules is ideally wider nearer to the intake, and narrower closest to the outlet. Advantageously, as the intake contains a higher density of organic material, there is a greater chance of clogging. Thus having a wider spacing near the intake offsets this risk. As the wastewater passes through the tank towards the outlet, organic material density decreases. Thus, to proportionally increase the efficacy of treatment, it is advantageous to decrease the spacing between the anode-cathode pairs defined by the electrode modules. Ultimately, it is beneficial for the spacing to be widest closest to the intake, and narrowest closest to the outlet.

To allow easy retrofitting of the electrode assembly to containers such as anaerobic bag digesters, aspects of the invention may allow for the electrode assembly to be switchable between a unexpanded configuration and an expanded configuration. In an unexpanded configuration, the electrode assembly occupies a small volume and so can be easily inserted into such containers. The electrode assembly can then be switched to the expanded configuration to increase its volume thereby to maximise the efficacy of the electrodes.

In certain aspects the electrode assembly comprises a support that is inflatable, at least in part, so that when inflated, the electrode assembly is in the expanded configuration, and when deflated, the electrode assembly is in the unexpanded configuration. For example, the support may comprise a gas tube with spurring branches on which electrodes are supported. When a gas is forced into the gas tube, the electrode assembly is able to switch to the expanded configuration where the branches separate and fan out. The electrode assembly may also comprise sufficiently weighted portions so that it remains submerged within the wastewater to be treated despite the introduction of air into the gas tube.

In a second specific aspect of the invention there is provided an electrode assembly for use with a wastewater treatment system. Preferably, the electrode assembly is adapted for submersion within a wastewater treatment tank, and comprises a set of interconnectable electrode modules as described above in relation to the first aspect. Specifically, each electrode module comprises at least one of:
- a first electrode of an anode-cathode pair coated with electrogenic microbes adapted to generate electrons via the consumption of organic matter in wastewater;
- a second electrode of the anode-cathode pair;
- a body, ideally supporting and separating the first and second electrodes; and
- an interface for physically connecting the module with at least one other of the set. Naturally, the interface may be further arranged to electrically-connect the first and second electrodes of the electrode module with respective first and second electrodes of other connected electrode modules of the set.

In a third specific aspect of the present invention there is provided a bio-electrochemical wastewater treatment process comprising at least one of:
- providing an electrode assembly, for example by interconnecting a set of electrode modules;
- submerging the electrode assembly within a wastewater treatment tank, the tank comprising a wastewater intake and a treated water outlet, and the electrode assembly being disposed between the intake and the outlet; and
- electrically-connecting the electrodes of the set of electrode modules, via a circuit to an external electrical source or load.

Ideally, the or each electrode module comprises at least one of:
- a first electrode of an anode-cathode pair coated with electrogenic microbes adapted to generate electrons via the consumption of organic matter in wastewater;
- a second electrode of the anode-cathode pair;
- a body, ideally supporting and separating the first and second electrodes; and
- an interface for physically connecting the module with at least one other of the set. The interface may be further arranged to electrically-connect the first and second electrodes of the electrode module with respective first and second electrodes of other connected electrode modules of the set;

It will be understood that features and advantages of different aspects of the present invention may be combined or substituted with one another where context allows. For example, the features of the system described in relation to the first aspect of the present invention may be present on the electrode assembly described in relation to the second aspect of the present invention. Furthermore, such features may themselves constitute further aspects of the present invention. For example, the electrode modules of the electrode assembly of the system according to the first aspect may itself constitute a further aspect of the present invention.

### Brief description of the drawings

In order for the invention to be more readily understood, embodiments of the invention will now be described, by way of example only, with reference to the accompanying drawings in which:
Figure 1 is a schematic plan diagram of a wastewater treatment system according to a first embodiment of the present invention;
Figure 2 is an overhead schematic view of the system of Figure 1;
Figure 3 is a schematic plan diagram of a wastewater treatment system according to a second embodiment of the present invention;
Figure 4 is an overhead schematic view of a first variant of the system of Figure 3;
Figure 5 is an overhead schematic view of a second variant of the system of Figure 3;
Figure 6 is a schematic plan diagram of a wastewater treatment system according to a third embodiment of the present invention;
Figure 7 is a schematic view of an electrode module for use in any one of the wastewater treatment system of Figures 1 to 6;
Figure 8 is a schematic view of a buoy for use in the wastewater treatment system of Figures 1 and 2;
Figure 9 is a schematic view of a weight for use in the wastewater treatment system of any one of Figures 1 to 6;
Figure 10 is a schematic plan diagram of a wastewater treatment system according to a fourth embodiment of the present invention;
Figures 11 and 12 are schematic views of an electrode module substitutive with that shown in Figure 7; and
Figure 13 is a schematic plan diagram of a wastewater treatment system according to a fifth embodiment of the present invention.

### Specific description

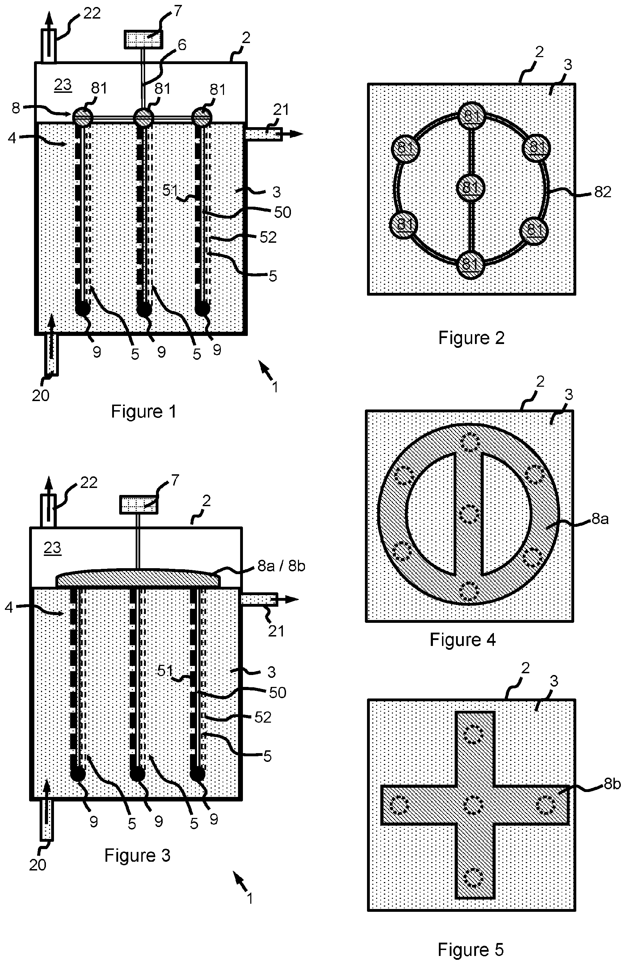

Figure 1 is a schematic plan diagram of a wastewater treatment system 1 according to a first embodiment of the present invention. The system 1 comprises a wastewater treatment tank 2 within which wastewater or organic waste 3 is contained for treatment. The system 1 also comprises an electrode assembly 4 having a plurality of electrode modules 5, a circuit 6 and an external electrical device 7 which may be an electrical source or load depending on the configuration of system 1. The circuit 6 connects the external electrical device 7 to the electrode assembly 4.

The system 1 further comprises a buoy 8 which floats on the surface of the wastewater 3 and which supports the electrode assembly 4. Within the tank 2 above the surface of the wastewater 3 is a gaseous headspace 23. The tank 2 comprises an intake 20 via which wastewater 3 is passed into the tank 2, an outlet 21 via which treated water is removed from the tank 2, and also a gas port 22 which communicates with the headspace 23.

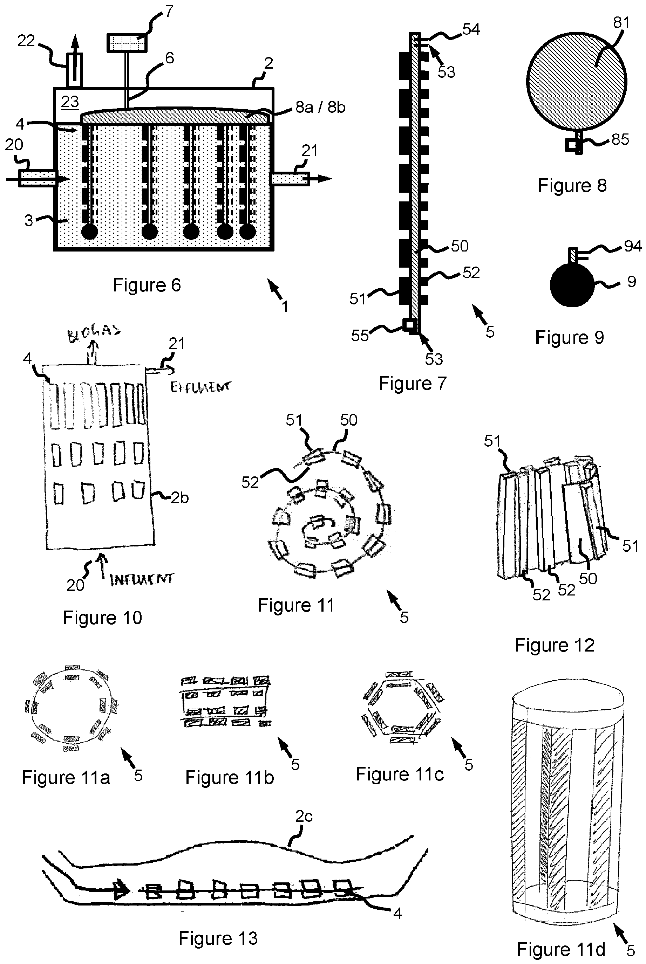

In alternative embodiments, the tank may be substituted with any suitable vessel or container for holding wastewater to be treated, and take on different sizes, shapes and forms. For example, the tank in Figure 1 may be substituted with a bag of an anaerobic bag digester 2c as shown in Figure 13. In certain embodiments, the "tank" may extend to a reservoir or a specifically-constructed wetland, with wastewater flowing into it via an upstream source, and treated water flowing from it from a downstream source, the "tank" being unsealed and open at its upper end at least in part.

The tank 1 of the embodiment of Figure 1 however is sealed so that gases generated via the bio-electrochemical process can be extracted from the headspace 23 via the gas port 22 and so harvested and utilised.

In alternatives, there may be multiple intakes, outlets, and gas posts. Additionally, the tank may be divided into a sequence of adjoining chambers thereby forcing wastewater to follow a non-linear path between the intake and the outlet, thereby advantageously increasing the period of treatment, and contact between the wastewater and the electrode assembly.

The electrode assembly 4 is submerged within the wastewater 3 of the wastewater treatment tank 2 between the intake 20 and outlet 21. The electrode assembly 4 has seven sets of electrode modules 5, only four of which are shown schematically in Figure 1. Each electrode module 5 is identical, and interconnected to adjacent others in the same set. Whilst there are advantages associated with mass-production of identical electrode modules 5, it will be understood that, in alternative embodiments, the electrode modules need not be identical.

Figure 7 is a schematic view of one of these electrode module 5. Each electrode module 5 comprises of electrodes, including a first electrode 51 functioning as an anode 51 of an anode-cathode pair, and second electrode 52 functioning as a cathode 52 of the anode-cathode pair. The anode 51 is provided with a bio-coating of electrogenic microbes adapted to generate electrons via the consumption of organic matter in wastewater. The coating comprises heterogeneous cultures of electromethanogenic microbes, capable of generating both electricity and methane via the consumption of organic matter within the wastewater. The cathode of the anode-cathode pair is not coated with microbes in this embodiment, but may be in alternatives. Each electrode module 5 also comprises a flexible, porous and elongate body 50 that supports the first and second electrodes, and separates them both physically and electrically with anodes disposed on one flat side of the body, and cathodes disposed on the reverse flat side of the body 50.

Figures 11 and 12 are schematic views of an electrode module substitutive with that shown in Figure 7. As can be seen, flexible body 50 allows rolling of the electrode modules 5 permitting easy transport and flexibility in configuration. This also allows for the easy insertion to retrofit electrodes into various tanks through small ports within the tanks 2. Figures 11a, 11b, 11c and 11d show alternative shapes that the electrode module(s) can take so as to conform to a particularly-shaped tank 2.

Referring back to Figure 7, each electrode module 5 also comprises an interface 53 via which it can be connected to two other electrode modules 5. The elongate body 50 of the electrode module 5 defines first and second ends of the body 50 at each of which part of the interface 53 is provided. Specifically, the interface 53 comprises a plug 54 positioned towards the first upper end of the electrode module 5, and a socket 55 positioned towards the second lower end of the electrode module 5. The plug 54 and socket 55 are complementary, allowing a push-fit connection to be made between adjacent electrode modules 5 within a set, the push-fit connection allowing adjacent electrode modules 5 to be electrically and physically connected to one another. In alternatives, other quick release fittings or fastenings may be used to create a connection. To prevent unintentional disconnection, a latch portion is also provided as part of the plug-and-socket arrangement. The fastening methods allows the electrode modules to distribute and adapt to the shape of different vessels.

In alternative embodiments, the interface may comprise other complementary coupling members instead of the plug 54 and socket 55. Nonetheless, the interface serves to electrically-connect corresponding electrodes 51, 52 of interconnected electrode modules 5. Thus, in each set of electrode modules 5, all of the first electrodes 51 (anodes) are electrically-connected together, and independent to this, all of the second electrodes 52 (cathodes) are electrically-connected together.

Referring back to Figure 1, each set of electrode modules 5 is suspended between a ball float 81, which acts as a buoy member of the buoy 8, and a weight 9. To this end, each ball float 81 and weight 9 have connectors to which a chain of electrode modules 5 of a set can be linked:

Figure 8 is a schematic view of the ball float 81, and Figure 9 is a schematic view of the weight 9, each in isolation. The ball float 81 comprises a connector 85, similar to the socket 55 of an electrode module 5 in that it is complementary and connectable with the plug 54 of an electrode module 5. Moreover, the connector 85 further electrically couples to the circuit 6 leading to the electrical source or load 7. Advantageously, this allows easy assembly of the system as only a single connection is required. The weight 9 also comprises a connector 94 that is similar to the plug 54 of an electrode module 5 in that it is complementary and connectable with the socket 55 of an electrode module 5.

Referring back to Figure 1, each ball float 81 and buoy 8 in general floats on the surface of the wastewater 3 within the tank 2, with each set of electrode modules hanging from the buoy 8, submerged in the wastewater to be treated with the weights 9 drawing each set of interconnected electrode modules 5 into a vertical position between the buoy 8 and the weights 9.

Referring to Figure 2 which is an overhead schematic view of the inside of the tank 2 shown in Figure 1, a matrix of seven ball floats 81 are held equally-spaced from one another by separation struts 82 which also allow for the electrical connection of each set of electrode modules 5 to the circuit 6. The equal spacing prevents short-circuits and also promotes an optimal distribution of electrode module sets and thus wastewater treatment sites throughout the tank 2.

In alternative embodiments, a different arrangement of components are possible:

Figure 3 is a schematic plan diagram of a wastewater treatment system 1 according to a second embodiment of the present invention. Like components are denoted by the same reference numerals. In this second embodiment, the buoy 8 is not composed from individual buoy members 81 but instead is constructed from a single unit in the form of an inflatable bladder. A side view of the inflatable bladder buoy 8 is shown schematically in Figure 3, but it will be understood that many variants and shapes of such a buoy 8 are possible. Figures 4 and 5 are overhead schematic views of the system of Figure 3 incorporating buoys 8a, 8b of two example variants. In each case, separation struts are not required but can be used, and the connectors 85 for hanging respective sets of electrode modules 5 are simply disposed on the underside of the body of these buoy 8a, 8b at different spaced locations as denoted by the circles in dashed outline in Figures 4 and 5.

In further alternatives, the buoy may be constructed from a low-density material. However, an advantage of the inflatable bladder variants is that that these can be deflated to occupy a small volume for transport, and then inflated on site for use. Similarly, individual ball floats of the first embodiment may be inflatable. Also in alternative embodiments, the weights may have alternative arrangements. For example, a plurality of weights 9, one for each set of electrode modules, may be free-hanging as in Figures 1 and 3, or may be interconnected and separated from one another by struts. In the latter case, it is preferred that this matches the separation at the upper end of the electrode sets so that each electrode set is suspended between the weight(s) and buoy(s) in orientations that are ideally both vertical and parallel to one another. As discussed, this allows an optimal equal distribution of wastewater treatment sites throughout the tank, and also prevent short-circuiting of the electrodes.

However, in some situations it can be advantageous to choose an unequal distribution of electrode modules. Figures 1 and 3 show up-flow tanks in which the intake 20 is situated at a lower part of the tank, the outlet 21 is near the top, and so fluid flow is generally vertical. As mentioned, other tank designs are possible and compatible with the invention and alternative electrode module distributions may be more appropriate.

Figure 6, for example, is schematic plan diagram of a wastewater treatment system according to a third embodiment of the present invention. It shows a side-flow tank 2a where wastewater fluid flow is substantially lateral. In further alternatives, the tank may be compartmentalised with wastewater fluid flow being forced along a non-linear (typically up-and-down) path.

In Figure 6, the electrode module sets are intentionally unevenly distributed with the electrode modules 5 disposed at irregular intervals, the spacing between them being wider nearer to the intake, and narrower closest to the outlet. Advantageously, as the intake contains a higher density of organic material, there is a greater chance of clogging. Thus having a wider spacing near the intake offsets this risk. As the wastewater passes through the tank towards the outlet, organic material density decreases. Thus, to proportionally increase the efficacy of treatment, it is advantageous to decrease the spacing between the anode-cathode pairs defined by the electrode modules. Ultimately, it is beneficial for the spacing to be widest closest to the intake 20, and narrowest closest to the outlet 21.

Referring to Figure 10 a similar advantage can be realised with an up-flow reactor. Figure 10 is a schematic plan diagram of a wastewater treatment system according to a fourth embodiment of the present invention, and in this case, the electrode density increases from bottom to top - towards the outlet (effluent port).

Further embodiments may substitute the buoy and/or the weights with a frame or support that is insertable into the tank 2, the frame holding and maintaining the electrode modules 5 within a specific arrangement and at a specific location within the tank 2.

Further embodiments may comprise tanks that are open at their upper end. In such alternatives, it is preferred that the system further comprises a gas trap configured and arranged to capture gas emitted by the electrode assembly, and in particular from the electrodes of the anode-cathode pairs defined by the one or more sets of electrode modules. The gas trap is ideally configured for attachment relative to the electrode assembly above the electrode modules so as to capture gas such as methane and/or hydrogen. Advantageously, the allows flexibility in the choice of wastewater tank - it need not necessarily be sealed or provided with a gas port 22.

Particularly envisaged is the deployment of certain aspects of the system in an outdoor environment such as within a wetland environment. In such aspects, the gas trap and/or buoy(s) typically float on the surface of the wastewater to be treated. Furthermore, they may support other components of the system, such as external electrical sources or loads 7. For example, solar panels can be supported and connected to the electrode modules. A further advantage resides in contacting or circulating water across a rear surface of the solar panels. This has the advantage of cooling them down, thereby increasing their performance. This also typically raises the temperature at the reaction sites adjacent to the electrodes of the system again improving reaction efficacy and so the efficiency of the breakdown of organic matter within the wastewater.

To allow easy retrofitting of the electrode assembly to containers such as anaerobic bag digesters such as that shown in Figure 13, aspects of the invention may allow for the electrode assembly to be switchable between an unexpanded configuration and an expanded configuration. In an unexpanded configuration, the electrode assembly occupies a small volume and so can be easily inserted into such containers. The electrode assembly can then be switched to the expanded configuration to increase its volume thereby to maximise the efficacy of the electrodes.

In certain aspects the electrode assembly comprises a support that is inflatable, at least in part, so that when inflated, the electrode assembly is in the expanded configuration, and when deflated, the electrode assembly is in the unexpanded configuration. For example, the support may comprise a gas tube with spurring branches on which electrodes are supported. When a gas is forced into the gas tube, the electrode assembly is able to switch to the expanded configuration where the branches separate and fan out. The electrode assembly may also comprise sufficiently weighted portions so that it remains submerged within the wastewater to be treated despite the introduction of air into the gas tube.

In other embodiments, the expanded configuration may be defined by electrodes modules that can be connected together with a fixed support that conforms to a particular size and shape vessel - thereby expanding the surface area of the operative electrodes.

In each embodiment described, the circuit 6 electrically-connects the electrodes 5 of each set of electrode modules to an electrical source or load 7. The system 1 can be configured to control switching between an electrical source or load depending on the configuration of the thus defined bio-electrochemical system. An electrical load may comprise another system according to an aspect of the present invention. Thus circuits of different systems may be coupled to one another, for example with the system 1 configured as an MFC providing electrical power to a system configured as an MEC.

The modularly of the resulting system 1 is particular advantageous, and overcomes the drawbacks of existing BESs described in the preamble, at least in part. For example, as the electrode assembly 4 can be composed of different combinations of electrode modules 5, its size, shape and capabilities can be adapted for a variety of different profiles of wastewater treatment tank. Furthermore, embodiments of the system 1 may be applied to an anaerobic bag digester, and thus be used for enhancing their operation, in particular for the generation of biogas.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A bio-electrochemical wastewater treatment system (1) comprising:
• a wastewater treatment tank (2), comprising a wastewater intake (20) and a treated water outlet (21);
• an electrode assembly (4) adapted for submersion within the wastewater treatment tank (2) between the intake (20) and outlet (21), the electrode assembly (4) comprising a set of interconnectable electrode modules (5), each electrode module (5) having:
∘ a first electrode (51) of an anode-cathode pair coated with electrogenic microbes adapted to generate electrons via the consumption of organic matter in wastewater;
∘ a second electrode (52) of the anode-cathode pair;
∘ a body (50), supporting and separating the first and second electrodes; and
∘ an interface (53) for physically connecting the module with at least one other of the set, the interface further arranged to electrically-connect the first and second electrodes of the electrode module with respective first and second electrodes of other connected electrode modules of the set; and
• a circuit (6) electrically-connecting the electrodes of the set of electrode modules to an external electrical source or load (7).

2. The system (1) of claim 1, wherein the interface (53) of each electrode module comprises a coupling member, such as a plug or socket, for coupling with a complementary coupling member, such as a socket or plug of other electrode modules of the set.

3. The system (1) of claim 2, wherein the body (50) of each electrode module is elongate, with a first end and second end, and the interface of each electrode module comprises first and second complementary coupling members located toward respective first and second ends of the body.

4. The system (1) of any preceding claim, further comprising a buoy (8) for floating within the wastewater treatment tank, the buoy having a connector configured and arranged for connection with the interface of an electrode module of the set of interconnectable electrode modules thereby, in use, to hang the set of electrode modules from the buoy.

5. The system (1) of claim 3, further comprising a weight (9) having a connector (94) configured and arranged for connection with the interface of an electrode module of the set of interconnectable electrode modules thereby, in use, to draw the electrode assembly into a vertical position between the buoy and the weight.

6. The system (1) of claim 4 or claim 5, wherein the electrode assembly (4) comprises at least two sets of interconnectable electrode modules, and the buoy comprises at least two corresponding connectors for connection with a respective set of electrode modules, the at least two connectors being positioned and spaced from one another on the buoy to separate each set of electrode modules from one another in use.

7. The system (1) of any one of claims 4 to 6, wherein the buoy (8) is inflatable, at least in part.

8. The system (1) of any preceding claim, wherein the wastewater treatment tank (2) is open at its upper end, and the system further comprising a gas trap configured for attachment relative to the electrode assembly above the electrode modules to capture gas emitted by electrodes of the anode-cathode pair.

9. The system (1) of claim 8, when dependent on any one of claims 4 to 7, wherein the gas trap and/or buoy supports the external electrical source or load.

10. The system (1) of claim 9, wherein the external electrical source (7) comprises solar panels.

11. The system (1) of any preceding claim, wherein the body (50) of each electrode module (5) is constructed from a flexible material.

12. The system of any preceding claim, wherein the electrode assembly (4) comprises a plurality of electrode modules (5) disposed between the intake (20) and the outlet (21), the spacing between the anode-cathode pairs defined by the electrode modules (5) being at their widest closest to the intake, and narrowest closest to the outlet.

13. The system of any preceding claim, wherein the electrode assembly (4) is switchable between a unexpanded configuration and an expanded configuration, the electrode modules of the electrode assembly occupying a smaller volume in the unexpanded configuration than in the expanded configuration, and the electrode assembly (4) comprises a support that is inflatable, at least in part, so that when inflated, the electrode assembly is in the expanded configuration, and when deflated, the electrode assembly is in the unexpanded configuration.

14. An electrode assembly (4) adapted for submersion within a wastewater treatment tank (2) for use in a wastewater treatment system (1), the electrode assembly comprising a set of interconnectable electrode modules (5), each electrode module (5) having:
• a first electrode (51) of an anode-cathode pair coated with electrogenic microbes adapted to generate electrons via the consumption of organic matter in wastewater;
• a second electrode (52) of the anode-cathode pair;
• a body (50), supporting and separating the first and second electrodes; and
• an interface (53) for physically connecting the module with at least one other of the set, the interface further arranged to electrically-connect the first and second electrodes of the electrode module with respective first and second electrodes of other connected electrode modules of the set.

15. A bio-electrochemical wastewater treatment process comprising:
• providing an electrode assembly by interconnecting a set of electrode modules, each electrode module having:
∘ a first electrode of an anode-cathode pair coated with electrogenic microbes adapted to generate electrons via the consumption of organic matter in wastewater;
∘ a second electrode of the anode-cathode pair;
∘ a body, supporting and separating the first and second electrodes; and
∘ an interface for physically connecting the module with at least one other of the set, the interface further arranged to electrically-connect the first and second electrodes of the electrode module with respective first and second electrodes of other connected electrode modules of the set;
• submerging the electrode assembly within a wastewater treatment tank, the tank comprising a wastewater intake and a treated water outlet, and the electrode assembly being disposed between the intake and the outlet; and
• electrically-connecting the electrodes of the set of electrode modules, via a circuit to an external electrical source or load.
